# EUROPÄISCHE PATENTSCHRIFT

(11) **EP 2 317 246 B1**
(45) Veröffentlichungstag und Bekanntmachung des Hinweises auf die Patenterteilung: **11.09.2013**
(21) Anmeldenummer: 10013656.3
(22) Anmeldetag: 14.10.2010
(51) Int. Cl.: F24J 2/52, F24J 2/46, H01L 31/00, H01L 31/048

(54) **Mehrteiliger Rahmen für plattenförmige Module**
Multi-part frame for plate-shaped modules
Cadre en plusieurs parties pour module en forme de plaque

(30) Priorität: 30.10.2009 DE 102009051415
(43) Veröffentlichungstag der Anmeldung: 04.05.2011
(73) Patentinhaber: Späte, Frank, 91052 Erlangen (DE)
(72) Erfinder: Schork, Rainer, 91330 Bammersdorf (DE); Späte, Frank, 91058 Erlangen (DE); Röder, Bernd, 91058 Erlangen (DE)

(56) Entgegenhaltungen:
- EP-A2- 0 531 869
- WO-A2-2004/079775
- DE-A1-102004 026 786
- DE-A1-102005 061 709
- DE-U1-202004 016 808
- FR-A1- 2 465 315

## Beschreibung

Die Erfindung betrifft einen mehrteiligen Rahmen für plattenförmige Module, vorzugsweise Dachmodule, der ein Halteprofil und ein Dichtprofil umfasst. Im speziellen befasst sich die Erfindung mit modularen Dach-Montagesystemen für Photovoltaikanlagen.

Derartige Halte- und Dichtprofile sind aus den Druckschriften WO 00/02256, DE 10 2004 026 786 A1, DE 202 17 489 U1, WO 2004 079775 A2, DE 2004 016808 U1 und der FR 2465315 A1 bekannt.

Die internationale Patentanmeldung WO 2004 079775 A2 beschreibt eine Haltevorrichtung für Solarelemente eines Solarfeldes, wobei eine Vielzahl von Trägerprofilen vorgesehen ist und die Solarelemente jeweils zwischen zwei der Trägerprofile gehalten sind, wobei die Haltevorrichtung in die Trägerprofile eingehängte Klammerelemente aufweist, wobei die Solarelemente jeweils auf einer Seite von einem der Trägerprofile gehalten sind und jeweils auf einer zweiten, der ersten gegenüberliegenden Seite von mindestens einem der Klammerelemente gehalten sind.

Das deutsche Gebrauchsmuster DE 20 2004 016 808 U1 beschreibt ein Dichtungselement für einen Glasverbinder für eine wasserdichte Verbindung von gegenüber der Horizontalebene geneigten und übereinander angeordneten Glasscheiben einer solartechnischen Anlage mit einem Glasverbinder, wobei der Glasverbinder als ein flaches und H-förmiges Metallprofil zur ein- oder beidseitigen Aufnahme von mit einem Dichtungselement aus einem elastischen Profil an ihren Enden verbundenen Glasscheiben und/oder anderen flachen Teilen ausgebildet ist. Die abdichtende Wirkverbindung entsteht durch das Eigengewicht der Glasscheiben und/oder anderen flachen Teilen mit der Formgebung des Glasverbinders und/oder des Dichtelements und/oder durch Montagekräfte in Richtung eines Steges des H-förmigen Metallprofils und damit quer zur Längsrichtung des H-förmigen Metallprofils durch eine keilförmige Lippe. Die Abmessungen des H-förmigen Metallprofils und seiner Schenkel und des Dichtungselements sind so aufeinander abgestimmt, dass zwischen dem Steg des H-förmigen Metallprofils und dem Dichtungselement im montierten Zustand ein Luftspalt verbleibt. Ein ähnliches, jedoch zweiteiliges Dichtprofil ist in der französischen Patentanmeldung FR 2 465 315 A1 beschrieben.

Dach-Montagesysteme für Photovoltaik (PV) unterteilen sich grob in Aufdach-, Indach-, Komplettdach- und Flachdachsysteme. Bisher dominieren Aufdachsysteme mit einem Marktanteil von 60 - 70 %, weil derartige Systeme historisch bedingt bevorzugt werden, wenige Probleme mit der Dichtheit bestehen, eine gute Hinterlüftung sowie Kühlung der Module und damit hohe Erträge gewährleistet sind, und weil keine guten Alternativen auf dem Markt verfügbar sind. Aufdachsysteme verfügen über gewisse Nachteile. So sind ein stabiler Rahmen und ein stabiles Montagesystem zur Aufnahme von Kräften notwendig, was einen hohen Materialeinsatz erfordert. Die Vielzahl der Bauteile für Aufdachsysteme erfordert eine aufwendige Montage. Darüber hinaus sind Aufdachsysteme optisch wenig ansprechend. Aus den zuvor genannten Nachteilen ergeben sich relativ hohe Kosten (Material und Arbeitszeit) und ein geringes Kostensenkungspotenzial.

Indachsysteme haben bisher einen geringeren Marktanteil, weil es wenige Anbieter gibt und die Vielzahl von Bauteilen eine aufwendige Montage erfordert. Eine schlechte Hinterlüftung und Kühlung der Module verursacht einen um bis zu 4 % geringeren Ertrag. Darüber hinaus ist die Dachdichtigkeit bisheriger Indachsysteme schlecht, so dass Indachsysteme von Monteuren, die für die Dachdichtigkeit gewährleistungspflichtig sind, bislang bevorzugt Aufdachsysteme zum Einsatz gebracht haben.

Der Markt für Indach- bzw. Ganzdachsysteme wächst im In- und Ausland, weil der Trend zu größeren Anlagen geht, was Indach- bzw. Komplettdachlösungen entgegen kommt. Darüber hinaus sind gebäudeintegrierte Anlagen optisch auch ansprechend.

Intelligente Indachsysteme lassen sich materialsparender herstellen, da Stabilität nicht durch den Rahmen und das Montagesystem gewährleistet werden muss, sondern durch die ohnehin vorhandene Dachkonstruktion übernommen wird. Weiterhin wird die übliche Dacheindeckung eingespart.

Die in den Druckschriften WO 00/02256, DE 10 2004 026 786 A1 und DE 202 17 489 U1 beschriebenen Indachsysteme sind kompliziert aufgebaut, umfassen viele Bauteile, erfordern einen hohen Konfektionierungsaufwand und sind vor Ort auf dem Dach zu montieren. Die daraus resultierenden hohen Kosten sind der Hauptgrund für den bisher geringen Einsatz von Indachsystemen in Deutschland. Weitere Nachteile ergeben sich aus der Vielzahl der Systemkomponenten, dem komplizierten Dachanschluss, den aufwendigen Konfektionierungsarbeiten, der umständlichen Montage, einer geringen Montagetoleranz, dem mangelnden Schutz gegenüber Niederschlägen jeglicher Art und der schlechten Dachdichtigkeit.

Der Erfindung liegt die Aufgabe zugrunde, die Nachteile des Stands der Technik zu überwinden und die Dichtheit des Systems im Überlappungsbereich der Module zu verbessern.

Um die der Erfindung zugrunde liegende Aufgabe zu lösen, wird ein mehrteiliger Rahmen gemäß Anspruch 1 angegeben, der ein Dichtlippenprofil mit mindestens zwei Dichtlippen umfasst, wobei das Dichtlippenprofil mit der Halteleiste verbunden, vorzugsweise verrastet ist und jeweils eine der Dichtlippen im Überlappungsbereich zweier Module an einem der überlappenden Module anliegt. Das Anliegen der Dichtlippen an den beiden überlappenden Modulen gewährleistet die Dichtheit des Systems im Überlappungsbereich der Module. Darüber hinaus erhöht das Dichtlippenprofil die Stabilität der Verbindung zwischen Halteleiste und Haltehaken. Durch die Verrastung des Dichtlippenprofils mit der Halteleiste ist gewährleistet, dass das Dichtlippenprofil im montierten Zustand des Rahmens mit eingesetzten plattenförmigen Modulen ausgetauscht werden kann.

Der erfindungsgemäße Rahmen umfasst zumindest ein erfindungsgemäßes Halteprofil sowie zumindest ein erfindungsgemäßes Dichtprofil, und bildet in Verbindung mit den passenden plattenförmigen Modulen ein formschlüssiges, wasserdichtes Schnell-Montagesystem. Im zusammengesetzten Zustand sind die Dichtprofile des erfindungsgemäßen Rahmens in vertikaler Richtung verschiebbar, so dass eine Entnahme eines plattenförmigen Moduls aus einer beliebigen Stelle eines Modulfeldes gewährleistet ist. Es versteht sich von selbst, dass das erfindungsgemäße Halteprofil und das erfindungsgemäße Dichtprofil auch unabhängig voneinander zum Einsatz kommen können.

Das in dem erfindungsgemäßen Rahmen verwendete Halteprofil für plattenförmige Module, vorzugsweise Dachmodule, ist aus Kunststoff oder Metall, insbesondere Aluminium und besitzt einen mehrteiligen Aufbau aus einer Halteleiste und mit der Halteleiste verbindbaren Haltehaken besitzt, wobei durch die Verbindung von Halteleiste und Haltehaken ein Profilkörper gebildet wird, welcher derart ausgestaltet ist, dass zwei benachbarte Module an einer Haltestruktur, vorzugsweise einer Dachunterkonstruktion, in einem Überlappungszustand gehalten werden, so dass sich der Profilkörper abschnittsweise zwischen den Modulen erstreckt. Das Halteprofil bildet das zentrale Element für die Montage der plattenförmigen Module. Das Halteprofil ermöglicht eine einfache Montage auf der Haltestruktur, z.B. durch Befestigung der Halteleiste mittels Holzschrauben auf den Dachlatten der Dachunterkonstruktion, eine sichere Fixierung der Module in den Haltehaken und eine Abrutschsicherung. Darüber hinaus bewirkt das Halteprofil einen intelligenten Wasserablauf durch Schindelung bzw. Überlappung der Module. Die Haltehaken sind dabei bevorzugt abschnittsweise in Längsrichtung des Halteprofils angeordnet. Durch eine derartige Verwendung der Haltehaken wird die Bildung von Schmutzkanten im unteren Bereich des gehaltenen Moduls wirksam reduziert bzw. verhindert, weil der Wasserablauf vom plattenförmigen Modul verbessert ist.

Durch Verwendung der Haltehaken können die Module werkzeuglos montiert und einzelne Module können aus einer beliebigen Position in aus einem Modulfeld leicht ausgewechselt werden. Ferner ermöglicht der Einsatz von Haltehaken mit unterschiedlicher Weite des Aufnahmeabschnitts die Anpassung des Halteabschnitts auf verschiedene Modulstärken. Durch gezielte Änderung der Breite und der Anzahl der Haltehaken kann das erfindungsgemäße Halteprofil auf die für das Halten des Moduls erforderlichen Haltekräfte angepasst werden.

Die für das Halteprofil verwendeten Materialien Kunststoff und Metall sind darüber hinaus im Allgemeinen leicht zu verarbeiten und korrodieren nicht. Eine punktförmige Belastung der Module wird vermieden und ein einfacher Dachanschluss wird ermöglicht. Die bevorzugten Materialien für den Profilkörper sind Acyrlnitril/Styrol/Acrylester (ASA), elastomermodifiziertes Polypropylen (EMPP), Ethylen-Propylen-Dien-Monomer-Kautschuk (EPDM), Aluminium, Kupfer und (Edel-)Stahl sowie Kombinationen der genannten Materialien, wobei Aluminium besonders bevorzugt ist. Diese Materialien sind extrudierbar bzw. strangpressbar und witterungsbeständig sowie chemikalien- und UV-beständig.

Es kann sich als vorteilhaft erweisen, wenn die Verbindung zwischen Halteleiste und Haltehaken durch Verrastung gebildet ist. Auf diese Weise ist gewährleistet, dass mehrere Haltehaken an beliebigen Stellen reversibel und fest mit der Halteleiste verbunden sein können. In diesem Zusammenhang ist es besonders bevorzugt, wenn die Anzahl der Haltehaken derart gewählt ist, dass jedes Modul von etwa zwei bis sechs Haltehaken, besonders bevorzugt von drei bis fünf Haltehaken gehalten wird. Eine Anzahl von Haltehaken in diesem Bereich ermöglicht einerseits ein stabiles Befestigen der Module am Halteprofil und erlaubt andererseits eine Anpassung des Halteprofils auf verschiedene Wind- und Schneelastzonen. Ebenso ist es möglich, dass jedes Modul durch lediglich einen Haltehaken gehalten wird, der sich aber zumindest über 60 %, vorzugsweise über mindestens 70 % der gesamten Länge der Halteleiste erstreckt.

Es kann sich als nützlich erweisen, wenn der Profilkörper derart ausgebildet ist, dass er zumindest eines der benachbarten Module, vorzugsweise beide Module, im Überlappungszustand randseitig umgreift. Dadurch kann ein plattenförmiges Modul formschlüssig und sicher zwischen zwei Halteprofilen gehalten werden.

Es kann sich auch als hilfreich erweisen, wenn die Haltehaken zumindest abschnittsweise, vorzugsweise im Bereich der Modulaufnahme mit einem Weichauflageüberzug versehen ist. In besonders bevorzugten Ausführungsformen handelt es sich bei dem Weichauflageüberzug um eine Gummierung. Durch Verwendung eines derartigen Weichauflageüberzugs kann die Gefahr eine Beschädigung des in den Haltehaken eingeführten plattenförmigen Moduls verringert werden.

Es kann sich als günstig erweisen, wenn der Profilkörper einen im Wesentlichen S-förmigen Halteabschnitt aufweist, der zwei im Wesentlichen U-förmige Modulaufnahmen definiert. Die Bezeichnungen S-förmig und U-förmig beziehen sich auf die bevorzugte Querschnittsform des Profilkörpers. Durch die S-förmige Querschnittsform lassen sich zwei Modulaufnahmen umsetzen, deren Einsteckrichtungen in unterschiedlichen Ebenen im Wesentlichen entgegengesetzt zueinander ausgerichtet sind, was einen einfachen und systematischen Aufbau des modularen Montagesystems von oben nach unten begünstigt.

Darüber hinaus kann es hilfreich sein, wenn die Halteleiste Nuten zur Aufnahme von Auflageprofilen für die Module umfasst. Sind in derartige Nuten Auflageprofile beispielsweise aus Gummi eingezogen, sind die Module in der Halteleiste schwimmend gelagert. Auf diese Weise ist gewährleistet, dass die Modulränder und die Rückseitenfolie bei PV-Modulen geschont und ein Verzug der Dachunterkonstruktion zumindest teilweise kompensiert werden kann. Zudem ermöglicht die Lagerung der Module auf Aufnahmeprofilen innerhalb gewisser Grenzen eine Kompensation von Variationen hinsichtlich der Modulstärke bzw. -dicke, so dass in ein und demselben Profilkörper Module unterschiedlicher Stärke und/oder Dicke aufgenommen werden können. Die Auflageprofile sind vorzugsweise derart dimensioniert, dass sämtliche handelsübliche kristalline PV-Module (z.B. 5 mm bis 7 mm Stärke) abdichtend aufgenommen werden können.

Es kann sich als praktisch erweisen, wenn der S-förmige Halteabschnitt Schenkel aufweist, die sich im Wesentlichen parallel zueinander erstrecken. Dadurch können die plattenförmigen Module präzise parallel zueinander ausgerichtet werden.

Das Halteprofil kann zur Montage gerahmter Module, insbesondere zur Dachmontage gerahmter Photovoltaik- und/oder Solarthermiemodule verwendet werden. Durch die Verwendung von Haltehaken mit geeigneter Weite in dem erfindungsgemäßen Halteprofil können auch die Rahmen gerahmter Module, insbesondere die Rahmen von Photovoltaik- und Solarthermiemodulen, die in der Regel Aluminiumrahmen sind, einfach in die erfindungsgemäße Halteleiste eingehängt werden. So können derartige gerahmte Module auf beliebigen Unterkonstruktionen, vorzugsweise auf Dachunterkonstruktionen montiert werden.

Das in dem erfindungsgemäßen Rahmen eingesetzte Dichtprofil für plattenförmige Module, vorzugsweise Dachmodule, ist derart ausgebildet, dass zwei benachbarte Module in einer Ebene liegend abdichtend gehalten werden, wobei das Dichtprofil einen Profilkörper aus Metall, Kunststoff oder Kombinationen daraus aufweist, der sich abschnittsweise zwischen den Modulen erstreckt, der Profilkörper im Wesentlichen H-förmig ausgebildet ist und zwei im Wesentlichen U-förmige Modulaufnahmen definiert, wobei die Modulaufnahmen einteilig ausgebildet sind. Die Bezeichnungen H-förmig und U-förmig beziehen sich auf die bevorzugte Querschnittsform des Profilkörpers. Durch die H-förmige Querschnittsform lassen sich zwei Modulaufnahmen umsetzen, deren Einsteckrichtungen in einer Ebene im Wesentlichen entgegengesetzt zueinander ausgerichtet sind, was einen einfachen und systematischen Aufbau des modularen Montagesystems begünstigt und gleichzeitig einen einfachen Dachanschluss an der Seite ermöglicht. Durch einen derartigen Aufbau des Dichtprofils ist gewährleistet, dass eine aus mehreren plattenförmigen Modulen bestehende, horizontale Anordnung beliebig nach rechts und links (Ortgang) erweitert werden, wobei die horizontal angeordneten Module in einer Ebene zu liegen kommen. Die Ausgestaltung des Profilkörpers erlaubt eine sehr schnelle Installation bei hoher Stabilität und ermöglicht ein hohes Maß an Dichtheit. Insgesamt ist ein einfacher Seitenanschluss (Ortgang) bewerkstelligbar.

Die für das Halteprofil verwendeten Materialien Kunststoff und Metall sind darüber hinaus im Allgemeinen leicht zu verarbeiten und korrodieren nicht. Eine punktförmige Belastung der Module wird vermieden und ein einfacher Dachanschluss wird ermöglicht.

Die bevorzugten Materialien für den Profilkörper sind Acrylnitril/Styrol/Acrylester (ASA), elastomermodifiziertes Polypropylen (EMPP), Hartgummi und Ethylen-Propylen-Dien-Monomer-Kautschuk (EPDM) sowie Aluminium, Kupfer und (Edel-)Stahl oder Kombinationen der genannten Materialien, wobei Aluminium und EPDM besonders bevorzugt sind. Ebenso können Kombinationen dieser Materialien eingesetzt werden. Diese Materialien sind extrudierbar bzw. strangpressbar und witterungsbeständig sowie chemikalien- und UV-beständig.

Es kann sich als vorteilhaft erweisen, wenn der Profilkörper des Dichtprofils zweiteilig ausgebildet ist, wobei die beiden Teile unter Bildung des im Wesentlichen H-förmigen Profils miteinander verbindbar sind. Dadurch ist eine Vormontage beider Seiten möglich, wobei in im Wesentlichen U-förmigen Modulaufnahmen vor der Montage auf dem Dach jeweils ein plattenförmiges Modul eingesetzt wird. Bevorzugt sind die zwei Teile des Profilkörpers formschlüssig und abdichtend verbindbar.

Das Dichtprofil erfüllt im Wesentlichen die Aufgabe der seitlichen Abdichtung des Moduls bzw. des Spalts zwischen zwei in einer Ebene benachbarten Modulen und ermöglicht eine einfache und schnelle Montage. Optional kann ein Kantenschutzprofil verwendet werden, welches das plattenförmige Modul während des Transports und der Montage vor Ort schützt und gleichzeitig eine Dichtfunktion übernimmt.

Dabei kann es von Nutzen sein, wenn in die Nuten der Halteleiste Auflageprofile für die Module eingezogen sind. Dadurch ist gewährleistet, dass die Modulränder und die Rückseitenfolie bei PV-Modulen geschont und ein Verzug der Dachunterkonstruktion zumindest teilweise kompensiert werden kann. Zudem ermöglicht die Lagerung der Module auf Aufnahmeprofilen innerhalb gewisser Grenzen eine Kompensation von Variationen hinsichtlich der Modulstärke bzw. -dicke, so dass in ein und demselben Profilkörper Module unterschiedlicher Stärke und/oder Dicke aufgenommen werden können. Die Auflageprofile sind vorzugsweise derart dimensioniert, dass sämtliche handelsübliche kristalline PV-Module (z.B. 5 mm bis 7 mm Stärke) abdichtend aufgenommen werden können.

Darüber hinaus kann es auch von Vorteil sein, wenn der Rahmen in einem Kreuzungsbereich von Halteprofil und Dichtprofil ferner ein Kreuzstück umfasst, das derart ausgebildet ist, dass es den Kreuzungsbereich abdichtet. Die Verwendung eines derartigen Kreuzstücks gewährleistet die Dichtheit des Systems im Kreuzungsbereich von Halteprofil und Dichtprofil für Neigungswinkel bis unter 10°. In Bezug auf eine kostengünstige Herstellung hat sich die Verwendung eines Spritzgussteils als Kreuzstück als besonders nützlich erwiesen. In Bezug auf das Kreuzstück ist es besonders bevorzugt, wenn das Kreuzstück eine Stützvorrichtung umfasst, die einstückig an das Kreuzstück angefügt ist und ein Dichtprofil stirnseitig abstützt. Dadurch wird ein Durchrutschen des Dichtprofils aufgrund seines Gewichts und aufgrund von Witterungsbedingungen wie Temperatur und Wind wirksam verhindert.

Es kann von Vorteil sein, wenn der Profilkörper des Halteprofils und/oder des Dichtprofils als Strangpressprofil oder Extrusionsprofil ausgebildet ist. Derartige Profile lassen sich in den erforderlichen Mengen zu vergleichsweise geringen Kosten produzieren.

Es kann sich als praktisch erweisen, wenn in den Profilkörper des Halteprofils und/oder des Dichtprofils eine Verstärkungseinlage eingebettet ist. Dadurch kann die Festigkeit der Profile erhöht werden, was im Hinblick auf extreme Wetterereignisse (Hagel, Sturm, etc.) durchaus wünschenswert ist. Die Verwendung einer Verstärkungseinlage hat sich insbesondere bei Halte- und/oder Dichtprofilen aus Kunststoff als besonders hilfreich erwiesen. Die Verstärkungseinlage ist vorzugsweise ein Metallprofil mit einer auf die Querschnittsform des Profilkörpers abgestimmten Querschnittsform. Bevorzugte Materialien für die Verstärkungseinlage sind Edelstahl, Aluminium oder Stahlblech. Durch intelligente Kombination unterschiedlicher Materialien können die unterschiedlichen Eigenschaften von Metall (hohe mechanische und thermische Stabilität) und Kunststoff (Flexibilität, Abdicht-, Isolations- und Passivierungseigenschaften) in optimaler Weise vereint und in ein Profil integriert werden. Durch Einbettung der Verstärkungseinlage in den Profilkörper kann die Verstärkungseinlage vor Korrosion und Witterungseinflüssen geschützt werden. Das Dichtprofil erhöht die Stabilität des Moduls gegenüber Durchbiegung vor allem bei der senkrechten Montage von Modulen. Erreicht werden kann dies z.B. durch eine starke Metalleinlage bzw. durch Befestigung des Dichtprofils am Dachaufbau. Bei Verwendung einer entsprechenden Verstärkungseinlage im Halteprofil kann das Halteprofil direkt auf die Dachsparren montiert werden, so dass auf die Verwendung von Dachlatten verzichtet werden kann, was zu einer weiteren Kosteneinsparung führt.

Es kann sich als nützlich erweisen, wenn der Profilkörper des Halteprofils und/oder des Dichtprofils ein Auflageprofil zur Kontaktierung eines Moduls aufweist. Das Auflageprofil ist vorzugsweise an einer Innenseite einer Modulaufnahme angeformt, bevorzugt koextrudiert. Das Auflageprofil besteht vorzugsweise aus einem unterschiedlichen, vorzugsweise weicheren Material als ein dahinterliegender Abschnitt des Profilkörpers, an welchen das Auflageprofil angeformt ist. Bevorzugte Materialien für das Auflageprofil sind thermoplastisches Elastomere (TPE), Acyrlnitril/Styrol/Acrylester (ASA) mit SoftTouch (chemikalien- und UV-beständig) und EPDM. Das Auflageprofil dient der schwimmenden Lagerung der Module, um die Modulränder und die Rückseitenfolie bei PV-Modulen zu schonen, und um einen Verzug der Dachunterkonstruktion kompensieren zu können. Zudem ermöglicht die Weichauflage innerhalb gewisser Grenzen eine Kompensation von Variationen hinsichtlich der Modulstärke bzw. -dicke, so dass in ein und demselben Profilkörper Module unterschiedlicher Stärke und/oder Dicke aufgenommen werden können. Die Weichauflage ist vorzugsweise derart dimensioniert, dass sämtliche handelsübliche kristalline PV-Module (z.B. 5 mm bis 7 mm Stärke) abdichtend aufgenommen werden können.

Es kann sich als praktisch erweisen, wenn der Profilkörper des Halteprofils und/oder des Dichtprofils eine Kaschierung aufweist. Die Kaschierung ist vorzugsweise eine UV- und/oder witterungsgeständige Folie aus Kunststoff, beispielsweise aus Polyvinylidenfluorid (PVDF) oder Polymethylmethacrylat (PMMA), die auf eine Wetterseite des Profilkörpers aufgebracht ist. Die Kaschierung bewerkstelligt einen effektiven UV-Schutz und erlaubt eine individuelle farbliche Gestaltung des Profilkörpers, z.B. in Abstimmung mit einem Farbton der Module.

Es kann sich als hilfreich erweisen, wenn der Profilkörper des Halteprofils und/oder des Dichtprofils eine Drainageeinrichtung aufweist, um Flüssigkeiten, die in einen Zwischenraum zwischen dem Profilkörper und dem Modul eindringen, ablaufen zu lassen. Dadurch können Frostschäden verhindert werden. Die Drainageeinrichtung ist beispielsweise als eine den Profilkörper durchdringende Bohrung ausgebildet, die so angebracht ist, dass die Flüssigkeit bei bestimmungsgemäßer Anordnung des Profilkörpers (z.B. an einer Dachunterkonstruktion) unter dem Einfluss der Gewichtskraft abläuft. Beim Profilkörper des Halteprofils ist die Drainageeinrichtung beispielsweise als eine den Boden der oberen Modulaufnahme durchdringende Bohrung ausgebildet, die vorzugsweise mit korrosionsbeständigem Material ausgekleidet ist, um eine ggf. vorhandene Verstärkungseinlage vor Korrosion zu schützen. Die Drainageeinrichtung kann auch derart bewerkstelligt werden, dass die Flüssigkeit bei bestimmungsgemäßer Anordnung des Profilkörpers (z.B. an einer Dachunterkonstruktion) unter dem Einfluss der Gewichtskraft zwischen dem Modul und Kontaktabschnitten und/oder Weichauflagen abläuft.

Der erfindungsgemäße Rahmen integriert damit alle wesentlichen Funktionen eines Montagesystems in lediglich zwei Profilen:
- Formschlüssige Fixierung von plattenförmigen Modulen auf dem Dach zur sicheren Aufnahme aller Lasten wie z.B. Wind und Schnee gemäß DIN1055;
- Seitliche Dichtprofile sind nach oben und unten verschiebbar, was eine einfache Montage und Demontage eines einzelnen plattenförmigen Moduls eines Indachsystems ermöglicht;
- Sichere Abdichtung durch Schindelung der Module, Schindelung der seitlichen Dichtprofile und optional Dichtlippenprofil sowie optional weitere Abdichtung durch Kreuzstücke;
- Auflageprofile bzw. Weichauflage zur schwimmenden Lagerung der Module, um die Modulränder und die Rückseitenfolie bei PV-Modulen zu schonen, und um einen Verzug der Dachunterkonstruktion kompensieren zu können;
- Flexible Laschen und Lippen bzw. verschieden weite Haltehaken zur Aufnahme von Modulen unterschiedlicher Dicken;
- Montage mit hoher Montagetoleranz (> ± 5 mm, also in etwa wie bei Dachziegeln üblich) auf Unterkonstruktion;
- Drainage von Flüssigkeiten, die in einen Zwischenraum zwischen dem Profilkörper und dem Modul eindringen, um Frostschäden zu verhindern;
- Abdeckung verschiedener Modulstärken mit nur einer Halteleiste unter Verwendung von Haltehaken verschiedener Weite und nur einem Dichtprofil unter Ausnutzung der Flexibilität des Profilkörpers des Dichtprofils und ggf. unter Verwendung von Ausgleichsprofilen (bzw. Adaptern) und/oder Kantenschutzprofilen mit jeweils U-förmigem Querschnitt, die randseitig auf die Module aufgesteckt werden, und/oder einstückig an das Dichtprofil angefügte Dichtlippen, die bei Verwendung an den plattenförmigen Modulen anliegen, um jeweils Dickenunterschiede der plattenförmigen Module zu kompensieren;
- Werkzeuglose Montage der Module;
- Werkzeuglose Montage der Dichtprofile;
- Werkzeuglose Montage der optionalen Kreuzstücke;
- Werkzeugloses Austauschen der Dichtlippenprofile.

Der erfindungsgemäße Rahmen hat den Vorteil, dass keine Klemmen, Schraubverbindungen, Adapter und Leisten benötigt werden. Überdies kann ein intelligenter Wasserablauf bewerkstelligt werden. Der erfindungsgemäße Rahmen lässt sich durch angepasste Längen des erfindungsgemäßen Halteprofils und des erfindungsgemäßen Dichtprofils einfach auf jede Modulgröße konfektionieren. Die gleichen Profile sind ebenfalls für die Dachanschlüsse oben (First), unten (Traufe) sowie rechts und links (Ortgang) verwendbar. Zusätzlich bestehen Designfreiheiten, z. B. im Hinblick auf die Farbgebung der Profile.

Ein hierin beschriebenes Verfahren zur Montage eines Modulsystems mit zumindest einem plattenförmigen Modul unter Verwendung des Halteprofils nach einer der vorangegangenen Ausführungen, welches nicht Bestandteil der Erfindung ist, umfasst die Schritte:
a) Befestigen von Halteprofilen an der Haltestruktur, in einem Abstand, der in etwa dem Abstand zweier gegenüberliegender Kanten des plattenförmigen Moduls entspricht;
b) Einbringen einer Kante des plattenförmigen Moduls in eine Aufnahme eines Halteprofils; und
c) Einbringen einer gegenüberliegenden Kante des plattenförmigen Moduls in eine Aufnahme eines anderen Halteprofils, so dass das plattenförmige Modul formschlüssig zwischen den Halteprofilen gehalten wird.

Dieses Verfahren erlaubt die werkzeuglose Montage eines Moduls zwischen zwei Halteprofilen ohne Einbringen von zusätzlichen Gummiprofilen mit dichtenden Eigenschaften. Der wegfallende Werkzeugeinsatz und der geringere Zeitaufwand bewirken eine erhebliche Verringerung der Kosten des Verfahrens gegenüber herkömmlichen Verfahren zur Montage eines Modulsystems mit zumindest einem plattenförmigen Modul.

Unter Verwendung von Dichtprofilen ist die durch das Verfahren gebildete Anordnung aus zwei Halteprofilen und einem Modul von links nach rechts beliebig erweiterbar.

Die Merkmale der bevorzugten Ausführungsbeispiele der Erfindung werden nachstehend mit Bezug auf die beiliegenden Zeichnungen erläutert:

### Kurze Beschreibung der Zeichnungen

- Fig. 1: zeigt eine nicht maßstäbliche, perspektivische Ansicht eines erfindungsgemäßen Dachsystems, umfassend vier plattenförmige Dachmodule, wobei jeweils eines der oberen zwei Dachmodule und jeweils eines der unteren zwei Dachmodule durch ein Halteprofil im Überlappungszustand gehalten werden, wobei jeweils zwei seitlich benachbarte Dachmodule durch ein Dichtprofil abdichtend verbunden sind. Das erfindungsgemäße Dichtlippenprofil ist im Überlappungsbereich der Module angeordnet.
- Fig. 2a: zeigt eine Schnittansicht der Halteleiste des Halteprofils.
- Fig. 2b: zeigt eine Schnittansicht eines Haltehakens des Halteprofils.
- Fig. 2c: zeigt eine Schnittansicht des Halteprofils mit Halteleiste, Haltehaken, und erfindungsgemäßen Dichtlippenprofil wobei zwei über die kürzere Seite benachbarte Module ohne Kantenschutzprofil bestimmungsgemäß im Überlappungszustand gemäß Fig. 1 gehalten werden.
- Fig. 3a: zeigt eine Schnittansicht eines einteiligen Dichtprofils für Module mit Kantenschutzprofil, wobei zwei über die längere Seite benachbarte Module mit Kantenschutzprofil bestimmungsgemäß im abgedichteten Zustand gemäß Fig. 1 gehalten werden.
- Fig. 3b: zeigt eine Schnittansicht eines zweiteiligen Dichtprofils in einem unverbundenen Zustand.
- Fig. 3c: zeigt eine Schnittansicht eines zweiteiligen Dichtprofils in einem verbundenen Zustand.
- Fig. 4: zeigt eine perspektivische Ansicht eines erfindungsgemäß verwendeten Kreuzstücks.
- Fig. 5: zeigt eine Schnittansicht einer Einbausituation des Halteprofils gemäß Fig. 2c.

### Detaillierte Beschreibung der bevorzugten Ausführungsbeispiele

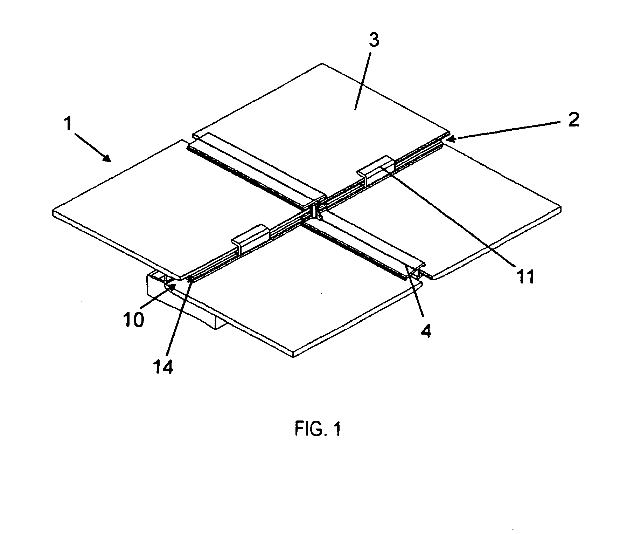

Figur 1 zeigt eine nicht maßstäbliche, perspektivische Ansicht des Modulsystems 1, umfassend vier plattenförmige Dachmodule 3. Jeweils eines der oberen zwei Dachmodule 3 und jeweils eines der unteren zwei Dachmodule 3 werden durch ein Halteprofil 2 mit Halteprofil 10 und Haltehaken 11 im Überlappungszustand gehalten. Zwei seitlich in einer Ebene benachbarte Dachmodule 3 sind jeweils durch ein Dichtprofil 4 abdichtend verbunden. Die Dichtprofile 4 sind ebenfalls geschindelt bzw. im Überlappungszustand angeordnet.

Es versteht sich von selbst, dass sich die positionsangebenden Begriffe, wie oben, unten, links, rechts, vorne, hinten, innen, außen, die im Rahmen dieser Beschreibung verwendet werden, auf die jeweilige Ansicht beziehen und darüber hinaus keinen bindenden Charakter haben.

Das in dem erfindungsgemäßen Rahmen verwendete Halteprofil 2 ist für plattenförmige Module, vorzugsweise Dachmodule ausgelegt. Modularität ist die Aufteilung eines Ganzen in Teile. Die Teile werden als Module, Bauelemente oder Bausteine bezeichnet. Bei einem modularisierten Aufbau werden Gesamtsysteme aus standardisierten Einzelbauteilen zusammengesetzt. Im Rahmen der vorliegenden Erfindung geht es Modulsysteme mit plattenförmigen Modulen und im speziellen um modulare Dach-Montagesysteme für Photovoltaikanlagen mit plattenförmigen Photovoltaikmodulen. Das Prinzip der Erfindung ist jedoch nicht auf das Gebiet der Photovoltaik (PV) beschränkt, sondern ist auf andere Gebiete der Technik anwendbar, bei welchen plattenförmige Module zum Einsatz kommen. Insbesondere ist das Prinzip der Erfindung anwendbar auf das Gebiet der Dachdeckung.

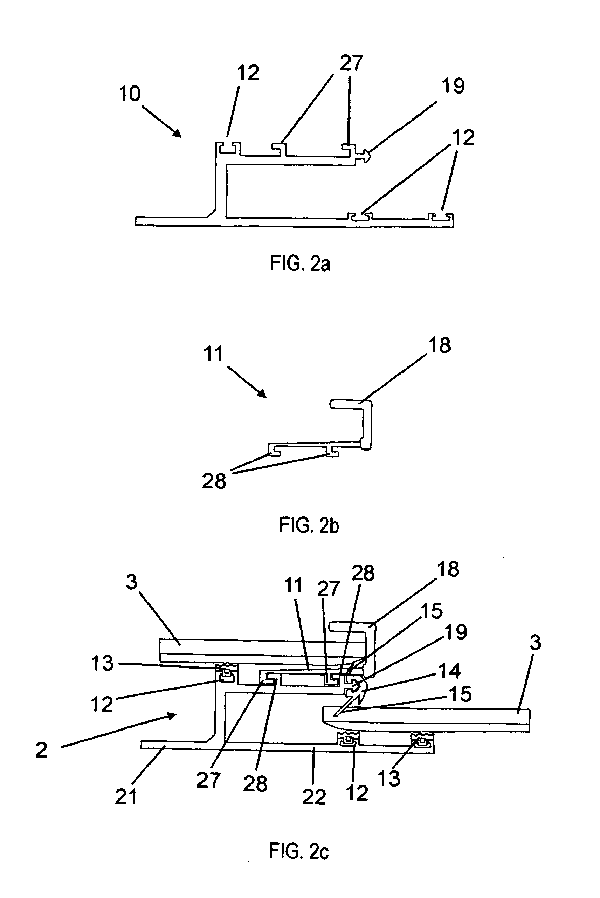

Das in dem erfindungsgemäßen Rahmen verwendete Halteprofil 2 aus Aluminium weist einen mehrteiligen Aufbau aus einer Halteleiste 10 und mehreren, mit der Halteleiste 10 verrasteten Haltehaken 11 auf (Figur 2c). Diese verrastete Verbindung erfolgt zwischen Rasthaken 28 der Haltehaken 11 und entsprechenden Rastaufnahmen 27 der Halteleiste 10. Dabei entsteht durch die Verrastung von Halteleiste 10 und Haltehaken 11 ein Profilkörper 21, 22, der derart ausgestaltet ist, dass zwei benachbarte Module 3 an einer Haltestruktur 7, vorzugsweise einer Dachunterkonstruktion, in einem Überlappungszustand gehalten werden, so dass sich der Profilkörper 21, 22 abschnittsweise zwischen den Modulen 3 erstreckt und die Module 3 randseitig umgreift.

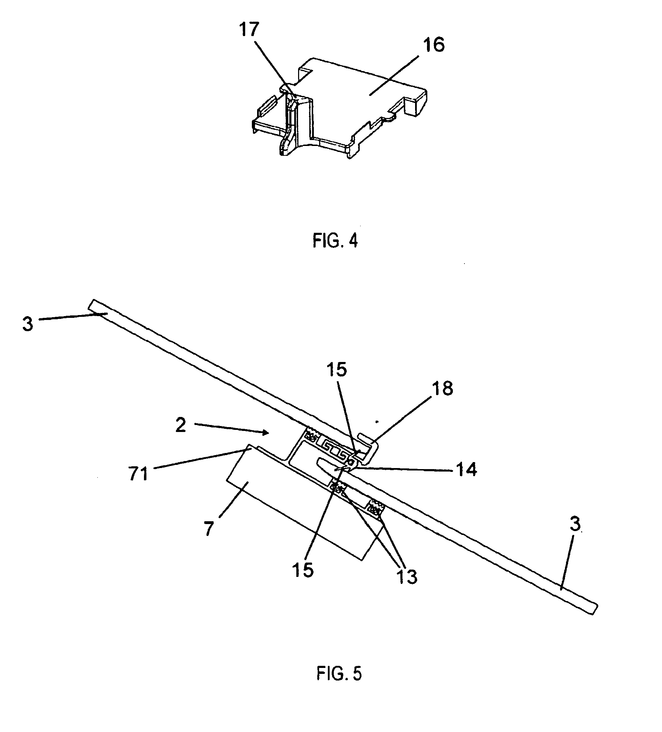

Der Begriff Überlappungszustand ist so zu verstehen, dass sich zwei benachbarte, plattenförmige Module in unterschiedlichen, vorzugsweise im Wesentlichen parallelen, Ebenen erstrecken, wobei ein Modul in einer Ansicht orthogonal zur Ebene des Moduls das benachbarte Modul zumindest teilweise verdeckt. Der Überlappungszustand benachbarter, plattenförmiger Module ist anschaulich in den Figuren 2c und 5 dargestellt.

Die Bezeichnung "randseitig umgreifen" ist so zu verstehen, dass sich der Profilkörper 21, 22 abschnittsweise auf beiden Seiten des Moduls 3, d.h. sowohl der Außenseite als auch der Innenseite des Moduls 3, erstreckt. Dadurch kann das Modul 3 zwischen zwei Halteprofilen 2 formschlüssig gehalten werden.

Figur 2a zeigt eine Schnittansicht der Halteleiste 10 des Halteprofils 2, Figur 2b zeigt eine Schnittansicht eines Haltehakens 11 des Halteprofils 2 und Figur 2c zeigt eine Schnittansicht des Halteprofils 2 mit Halteleiste 10 und Haltehaken 11, wobei zwei über die kürzere Seite benachbarte Module 3 ohne Kantenschutzprofil bestimmungsgemäß im Überlappungszustand gemäß Fig. 1 gehalten werden.

Im Querschnitt gesehen umfasst der so gebildete Profilkörper des Halteprofils 2 einen Befestigungsabschnitt 21, der an der Haltestruktur 7 festlegbar ist, und einen im Wesentlichen S-förmigen Halteabschnitt 22, der zwei im Wesentlichen U-förmige Modulaufnahmen definiert. Der S-förmige Halteabschnitt 22 ist dabei aus Teilen der Halteleiste 10 und dem Haltehaken 11 zusammengesetzt und umfasst drei Schenkel, die sich im Wesentlichen parallel zueinander erstrecken und dazwischen die Modulaufnahmen definieren. Am obersten, freien Schenkel sowie am sich daran anschließenden Abschnitt des S-förmigen Halteabschnitts 22 ist ein Weichauflageüberzug 18 angebracht, der das in die Modulaufnahme einzusetzende Modul schützt.

Der Befestigungsabschnitt 21 erstreckt sich im Wesentlichen in Fluchtrichtung des untersten Schenkels 24 des S-förmigen Halteabschnitts 22, und bildet mit diesem Schenkel eine im Wesentlichen ebene Auflagefläche 23 des Halteprofils 2. Der Weichauflageüberzug 18 besteht aus einem weichen Kunststoff. Bevorzugte Materialien für die Weichauflage sind TPE oder ASA mit SoftTouch (chemikalien- und UV-beständig) sowie EPDM.

An der Halteleiste 10 sind drei Nuten 12 einstückig angeformt, in die Auflageprofile 13 für die Module 3 eingezogen sind. Eine dieser Nuten 12 ist am mittleren Schenkel des S-förmigen Halteabschnitts 22 angeformt, während sich die beiden anderen Nuten 12 am unteren Schenkel befinden. Als Material für die Auflageprofile 13 wird ein weicher Kunststoff eingesetzt, wobei es sich vorzugsweise um Auflageprofile 13 aus TPE oder ASA mit SoftTouch (chemikalien- und UV-beständig) oder EPDM handelt.

An dem dem Haltehaken zugewandten Ende des Teils des mittleren Schenkel, der von der Halteleiste 10 gebildet wird, ist eine Rastnase 19 einstückig angeformt. Mit dieser Rastnase 19 ist ein Dichtlippenprofil 14 mit zwei Dichtlippen 15 verrastet. Die beiden Dichtlippen 15 des Dichtlippenprofils 14 sind dabei derart angeordnet und ausgestaltet, dass jeweils eine der Dichtlippen 15 im Überlappungsbereich zweier Module 3 an einem der überlappenden Module 3 anliegt.

Die bevorzugten Abmessungen des Halteprofils für ein Modul 3 mit einer Stärke (= Abstand zwischen Außenseite und Innenseite) von 5 mm werden nachstehend mit Bezug auf Fig. 2c erläutert. Die Auflagefläche 23 weist eine Erstreckung in der Bildebene von 90 mm auf, wobei der Befestigungsabschnitt 21 ca. 40 mm lang ist und der unterste Schenkel 24 des Halteabschnitts 22 ca. 50 mm lang ist.

Die Innenseiten der die untere Modulaufnahme definierenden Schenkel des S-förmigen Abschnittes weisen einen Abstand von 9 mm auf. Der Abstand der Innenseiten der die obere Modulaufnahme bildenden Schenkel beträgt ebenfalls 9 mm. Die Breite des Haltehakens 11 liegt im Bereich von 3 cm bis 4 cm.

Der erfindungsgemäße, mehrteilige Rahmen für plattenförmige Module 3, vorzugsweise Dachmodule, umfasst zumindest ein Halteprofil 2 nach einer der zuvor beschriebenen Ausführungen und ein Dichtprofil 4.

Das in dem erfindungsgemäßen Rahmen verwendete Dichtprofil 4 kann einteilig oder zweiteilig gefertigt werden. Beim einteiligen Profil sind zwei gegenüberliegenden U-förmige Dichtflächen vorgesehen, so dass das Profil nicht herausrutschen kann. Dadurch wird ebenfalls ein einfacher Seitenanschluss (Ortgang) ermöglicht. Beim zweiteiligen Profil sind insgesamt drei Dichtflächen vorgesehen, wobei eine Abdichtung des Dichtprofils zu beiden benachbarten Modulen 3 und zwischen den beiden Teilen des Dichtprofils 4 erforderlich ist. Durch den zweiteiligen Aufbau des Dichtprofils wird die Vormontage beider Seiten ermöglicht. Dazu wird vorzugsweise in jeweils ein Teil des Dichtprofils ein Modul eingesetzt. Im einfachsten Fall kann durch Auftrennung des einteiligen Profils und Anbringung eines Falzes bzw. Doppelfalzes (wie bei Ziegeln) ein zweiteiliges Profil hergestellt werden.

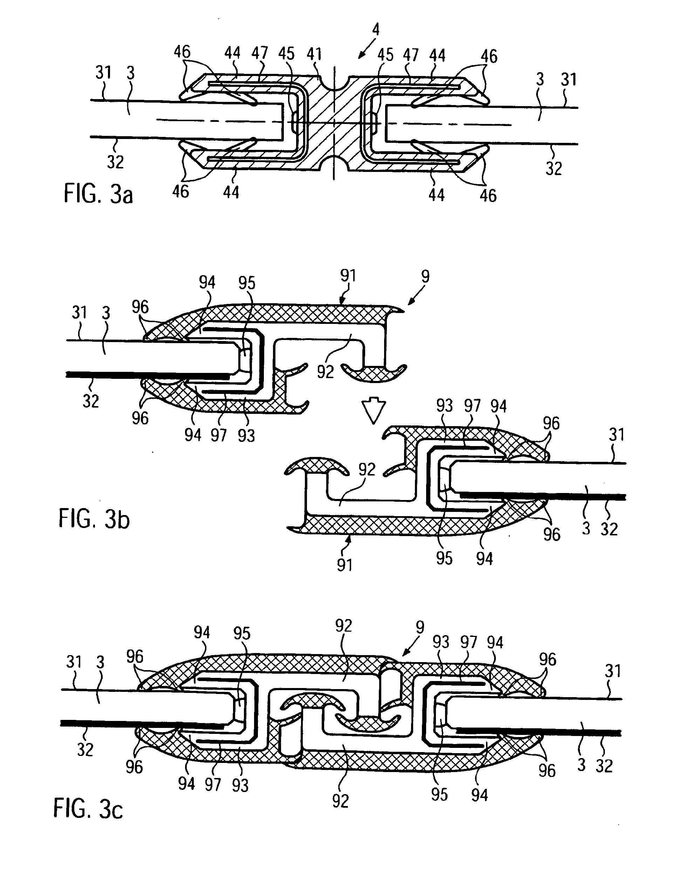

Zwei Varianten eines Dichtprofils 4 des erfindungsgemäßen, mehrteiligen Rahmens sind in Fig. 3a und Fig. 3b dargestellt:
Das einteilige Dichtprofil 4 für plattenförmige Module 3 wird nachstehend mit Bezug auf Fig. 3a näher erläutert. Der Profilkörper 41 ist im Wesentlichen H-förmig derart ausgebildet, um zwei benachbarte Module 3 in einer Ebene liegend abdichtend zu halten, so dass sich der Profilkörper 41 abschnittsweise zwischen den Modulen 3 erstreckt. Jeweils zwei sich im Wesentlichen parallel erstreckende Schenkel 44 definieren eine Modulaufnahme. Die Schenkel 44 weisen jeweils eine freie Länge von ca. 13 mm auf, wobei jeweils am freien Ende Dichtabschnitte 46 in und entgegen einer Einsteckrichtung in die Modulaufnahme vorstehen.

Die Dichtabschnitte 46 sind im Mündungsbereich jeder Modulaufnahme angeformt, vorzugsweise koextrudiert. Jeder der Dichtabschnitte 46 besteht vorzugsweise aus einem unterschiedlichen, vorzugsweise weicheren Kunststoff als ein dahinterliegender Abschnitt des Profilkörpers 41, an welchen der Dichtabschnitt 46 angeformt ist.

Optional kann ein Kantenschutzprofil verwendet werden, um das plattenförmige Modul 3 während des Transports und der Montage vor Ort zu schützen und gleichzeitig eine Dichtfunktion zu übernehmen. Das Kantenschutzprofil umfasst einen U-förmigen Querschnitt und ist aus Kunststoff gefertigt. Das Kantenschutzprofil ist auch als Adapter für unterschiedliche Modulstärken einsetzbar.

Zwei U-förmig ausgebildete Verstärkungseinlagen 47 aus Metall (z.B. Stahlblech mit 0,5 mm Stärke) sind in den Profilkörper 41 derart eingebettet, dass sich die Schenkel jeder Verstärkungseinlage 47 innerhalb der gegenüber liegenden Schenkel 44 einer Modulaufnahme erstrecken. Am Boden jeder Modulaufnahme, gegenüber der Mündung, ist eine Weichauflage 45 angeformt, vorzugsweise koextrudiert. Die Weichauflage 45 besteht aus einem weicheren Kunststoff als ein dahinterliegender Abschnitt des Profilkörpers 41, an welchen die Weichauflage 45 angeformt ist. Bevorzugte Materialien für den Dichtabschnitt 46 und die Weichauflage 45 sind EPDM, TPE oder ASA mit SoftTouch (chemikalien- und UV-beständig). Bevorzugte Materialien für den Profilkörper 41 sind Aluminium und EPDM.

Das zweiteilige Dichtprofil 4 wird nachstehend mit Bezug auf Fig. 3b und Fig. 3c beschrieben. Das zweiteilige Dichtprofil 9 umfasst zwei baugleiche, einteilige und zumindest abschnittsweise flexible Profilkörper 91 vorzugsweise aus Kunststoff, welche derart formschlüssig verbindbar sind, um zwei benachbarte Module 3 in einer Ebene liegend abdichtend zu halten, so dass sich die Profilkörper 91 abschnittsweise zwischen den Modulen 3 erstrecken. Jeder Profilkörper 91 umfasst einen im Wesentlichen U-förmigen Verbindungsabschnitt 92 und einen im Wesentlichen U-förmigen Aufnahmeabschnitt 93. Der Verbindungsabschnitt 92 und der Aufnahmeabschnitt 93 weisen zumindest einen gemeinsamen Schenkel auf. Eine Verbindungsrichtung, in welcher die Profilkörper 91 verbindbar sind, und eine Einsteckrichtung, in welcher ein Modul 3 in eine Modulaufnahme eines Profilkörpers 91 einsteckbar ist, verlaufen im Wesentlichen senkrecht zueinander. Der Verbindungsabschnitt 92 und der Aufnahmeabschnitt 93 sind abschnittsweise mit einem angeformten, vorzugsweise koextrudierten, Kunststoffmantel versehen.

Der Kunststoffmantel bildet Dichtabschnitte 96 im Mündungsbereich jedes Aufnahmeabschnitts 93 sowie Dichtabschnitte im Bereich des Verbindungsabschnitts 92. Eine optionale, U-förmig ausgebildete Verstärkungseinlage 97 aus Metall (Aluminium-Folie mit 0,5 mm Stärke) ist in dem Aufnahmeabschnitt 93 jedes Profilkörpers 91 derart eingebettet, dass sich die Schenkel der Verstärkungseinlage 97 innerhalb der gegenüber liegenden Schenkel 94 einer Modulaufnahme erstrecken. Am Boden jeder Modulaufnahme ist eine Weichauflage 95 angeformt, vorzugsweise koextrudiert. Die Weichauflage 95 besteht aus einem unterschiedlichen, vorzugsweise weicheren Kunststoff als ein dahinterliegender Abschnitt des Profilkörpers 91, an welchen die Weichauflage 95 angeformt ist. Bevorzugte Materialien für den Dichtabschnitt 46 und die Weichauflage 95 sind TPE oder ASA mit SoftTouch (chemikalien- und UV-beständig). Bevorzugtes Material für den Profilkörper 91 ist EPDM.

Im verbundenen Zustand gemäß Fig. 3c liegt kein Teil des Verbindungsabschnitts 92 oder des Aufnahmeabschnitts 93 nach innen oder außen frei. Das Dichtprofil 9 ist im abgedichteten Zustand zwischen zwei in einer Ebene liegenden Modulen gehalten.

Im Kreuzungsbereich von Halteprofil 2 und Dichtprofil 4 befindet sich ein in Fig. 4 dargestelltes Kreuzstück 16, durch das der Kreuzungsbereich abgedichtet wird. Das Kreuzstück 16 ist auf der Halteleiste 10 liegend und zwischen dem oberen und dem unteren Halteprofil 4 angeordnet. Dadurch gewährleistet die Verwendung eines derartigen Kreuzstücks 16 die Dichtheit des Systems im Kreuzungsbereich von Halteprofil 2 und Dichtprofil 4 für Neigungswinkel bis unter 10°. Das Kreuzstück 16 ist eine im Wesentlichen rechtwinklige Grundplatte, an deren Ober- und Unterseite Laschen für die Halterung und Abstützung des Kreuzstücks 16 am Halteprofil 2 angeformt sind. In der in Fig. 4 dargestellten Ausführungsform des Kreuzstücks 16 befinden sich an der Oberseite der Grundplatte ein Paar derartiger Laschen und an der Unterseite zwei Paar derartiger Laschen. Die Laschenpaare sind jeweils an den Seiten der Grundplatte parallel in einem Abstand angeordnet, der die Breite des Dichtprofils 4, 9 geringfügig übersteigt. Dadurch ist gewährleistet, dass die Dichtprofile trotz der Laschen noch vertikal verschiebbar sind. Das obere, an der Unterseite der Grundplatte angeformte Laschenpaar gewährleistet darüber hinaus ein stabiles Anliegen des Kreuzstücks 16 an den Halteleisten 10. An die Grundplatte des Kreuzstücks 16 ist einstückig eine Stützvorrichtung 17 angeformt. Die Stützvorrichtung 17 stützt das Dichtprofil 4 ab und verhindert dadurch wirksam dessen Abrutschen. Das Kreuzstück 16 ist als Spritzgussteil ausgebildet.

Die Dimensionen des Halteprofils 2 und des Dichtprofils 4, 9 sind auf die Abmessungen des plattenförmigen Moduls 3 derart abgestimmt, so dass die gewünschten Halte-, Sicherungs- und Dichtfunktionen gewährleistet sind. Der Profilkörper des Halteprofils 2 ist vorzugsweise ein Stranggussprofil aus Aluminium und der Profilkörper des Dichtprofils 4, 9 ist vorzugsweise ein Extrusionsprofil aus Kunststoff, bevorzugt ASA oder EPDM. Je nach Bedarf kann das Halteprofil 2 und/oder das Dichtprofil 4 modifiziert werden, um verschiedenartige Anforderungen zu erfüllen: Beispielsweise kann der Profilkörper 21, 22; 41, 91 des Halteprofils 2 und/oder des Dichtprofils 4, 9 eine Verstärkungseinlage 27; 47, 97 enthalten. Außerdem kann der Profilkörper 41, 91 des Dichtprofils 4, 9 einen Kontaktabschnitt 45 zur punkt- und/oder linienförmigen Kontaktierung eines Moduls 3 aufweisen. Der Kontaktabschnitt 45 ist vorzugsweise auf beiden Seiten einer Modulaufnahme vorgesehen, um ein mit einem Kantenschutzprofil versehenes Modul 3 formschlüssig aufzunehmen, so dass sich die eine Modulaufnahme definierenden Schenkel 44 parallel zum Modul 3 erstrecken und den Kontaktabschnitt 45 mit einer Außenseite oder Innenseite eines Moduls 3 punkt- und/oder linienförmig in Kontakt gelangen, wie beispielsweise in Figur 3a zu erkennen ist. Ferner kann der Profilkörper 41, 91 des Dichtprofils 4, 9 zur Abdichtung eines Spalts zwischen dem Dichtprofil 4, 9 und einem Modul 3 einen oder mehrere Dichtabschnitte 46 aufweisen, wobei die Dichtabschnitte 46 jeweils in etwa im Mündungsbereich der jeweiligen Modulaufnahmen des Dichtprofils 4 angeordnet sind.

Ein Verfahren zur Montage eines Modulsystems mit zumindest einem plattenförmigen Modul 3 unter Verwendung des Halteprofils 2 nach einer der vorangegangenen Ausführungen, umfasst die Schritte:
a) Befestigen von Halteprofilen 2 an der Haltestruktur 7, in einem Abstand, der in etwa dem Abstand zweier gegenüberliegender Kanten des plattenförmigen Moduls 3 entspricht;
b) Einbringen einer Kante des plattenförmigen Moduls 3 in eine Aufnahme eines Halteprofils 2;
c) Einbringen einer gegenüberliegenden Kante des plattenförmigen Moduls 3 in eine Aufnahme eines anderen Halteprofils 2, so dass das plattenförmige Modul 3 formschlüssig zwischen den Halteprofilen 2 gehalten wird.

In dem Verfahren werden zunächst mehrere Halteprofile 2 auf einer Dachunterkonstruktion 7 befestigt. Dazu wird die Anlagefläche des Profilkörpers jedes Halteprofils 2 an einer Auflagefläche 71 einer Dachlatte 7 angelegt. Anschließend wird ein Befestigungsmittel durch den Befestigungsabschnitt 21 in die Dachlatte 7 geschraubt. Der Abstand zwischen dem oberen Halteprofil 2 und dem unteren Halteprofil 2 ist derart zu bemessen, dass die nachfolgend beschriebenen Schritte ausführbar sind.

Die vordere Kante des Moduls 3 wird nun in die untere Modulaufnahme des oberen Halteprofils 2 eingeführt, während sich die hintere Kante außerhalb der oberen Modulaufnahme des unteren Halteprofils 2 befindet. Das vordere Ende des Moduls 3 wird nun bis zum Anschlag in die untere Modulaufnahme des oberen Halteprofils 2 eingeschoben. Der Abstand zwischen dem oberen Halteprofil 2 und dem unteren Halteprofil 2 ist derart zu bemessen, dass die hintere Kante des Moduls 3 in die obere Modulaufnahme des unteren Halteprofils 2 einführbar ist, wenn das vordere Ende des Moduls 3 bis zum Anschlag in die untere Modulaufnahme des oberen Halteprofils 2 eingeführt ist.

Nachfolgend wird das vordere Ende des Moduls 3 in die obere Modulaufnahme des unteren Halteprofils 2 vollständig einrastet. Der Abstand der Halteprofile 2 ist dabei so dimensioniert, dass das Modul 3 in dieser Stellung formschlüssig zwischen dem oberen Halteprofil 2 und dem unteren Halteprofil 2 gehalten wird und nicht weiter in die untere Aufnahme des oberen Halteprofils 2 eingeschoben werden kann. Mit benachbarten Modulen 3 wird in gleicher Weise verfahren. In dieser Stellung ist das Modul 3 bestimmungsgemäß gegenüber den Halteprofilen 2 angeordnet und wird durch Dichtlippen 15 des Dichtlippenprofils 14 gegenüber dem oberen Halteprofil 2 und dem unteren Halteprofil 2 abgedichtet.

Weitere plattenförmige Module können in gleicher Weise montiert werden. Die Anordnung kann nach oben und unten sowie nach links und rechts beliebig erweitert werden. Bei einer Erweiterung der Anordnung nach links und rechts ist ein zu dem ersten plattenförmigen Modul benachbartes Modul nach der Abfolge der Schritte a) bis c) zu montieren, wobei zwischen den in einer Ebene liegenden Modulen ein Dichtprofil abdichtend anzuordnen ist. Bei einer Erweiterung der Anordnung nach oben und unten sind weitere Halteprofile vorzusehen, wobei nach der Abfolge der Schritte a) bis c) vorzugehen ist. Die nach oben und unten benachbarten Module und Dichtprofile werden im Überlappungszustand angeordnet, so dass Niederschläge keine ungewollten Fließrichtungen einnehmen.

Auch die Anschlüsse an First und Traufe lassen sich leicht bewerkstelligen:
Beim firstseitigen Anschluss des Halteprofils 2, dessen Profilkörper den Befestigungsabschnitt 21 und den im Wesentlichen S-förmigen Halteabschnitt 22 umfasst, wobei der Befestigungsabschnitt 21 mit einem Schenkel des Halteabschnitts 22 die Auflagefläche des Halteprofils 2 bildet, mit welcher das Halteprofil 2 an einer Dachunterkonstruktion anliegt, ist das oberste Modul 3 in der unteren Modulaufnahme des Halteprofils 2 aufgenommen, wobei das Dichtlippenprofil 14 einen Spalt zwischen dem Halteprofil 2 und einer Außenseite des Moduls 3 abdichtet. Eine Innenseite des Moduls 3 ist der Dachunterkonstruktion zugewandt. Der Dachanschluss auf der Firstseite erfolgt durch ein gekantetes Blech, welches vom Firstziegel bis zum obersten Halteprofil 2 reicht. Die Länge des Firstbleches ist unabhängig von der Modullänge. Ein zusätzliches Halteprofil 2 ist nicht erforderlich. Eine Firstlatte befindet sich unter dem Firstziegel. Das Firstblech ragt unter der Firstlatte und unter dem Firstziegel hervor, wobei das untere Ende des Firstbleches formschlüssig zwischen zwei Schenkeln des Halteprofils 2 einrastet.

Der Anschluss des Halteprofils 2 an die Traufe erfolgt durch ein gekantetes Blech vom untersten Halteprofil 2 bis zur Regenrinne. Die Länge des Bleches ist unabhängig von der Länge des Moduls 3, so dass kein zusätzliches Profil 2 notwendig ist. Das Traufenblech ist in der unteren Aufnahme des Halteprofils 2 derart aufgenommen, dass sich das gekantete Ende des Traufenblechs mit dem hinteren Ende der Modulaufnahme Kontakt befindet.

Der Befestigungsabschnitt 21 bildet mit einem Schenkel des Halteabschnitts 22 die Auflagefläche des Halteprofils 2, mit welcher das Halteprofil 2 an der Dachunterkonstruktion anliegt. Der Befestigungsabschnitt 21 ist mit einem Befestigungsmittel an der Dachunterkonstruktion festgelegt. Das Modul 3 wird in zuvor beschriebener Art und Weise zwischen den die obere Modulaufnahme definierenden Schenkeln des Halteprofils 2 angeordnet, so dass die Außenseite des Moduls 3 nach außen weist und die Innenseite des Moduls 3 der Dachunterkonstruktion zugewandt ist. Das unterste Modul 3 und das Traufenblech sowie das Traufenblech und die Regenrinne sind im Überlappungszustand angeordnet, so dass Niederschläge keine ungewollte Fließrichtung einnehmen können.

Der seitliche Dachanschluss wird beidseitig mit dem Dichtprofil bewerkstelligt. Dazu wird ein gekantetes Blech für den seitlichen Dachanschluss in einer Modulaufnahme des Dichtprofils formschlüssig aufgenommen. Die nach oben und unten benachbarten Module und Dichtprofile werden im Überlappungszustand angeordnet. Ein zusätzliches Profil ist somit nicht notwendig.

Die Erfindung hat das Potential, die Gesamtkosten einer gebäudeintegrierten Photovoltaik-Anlage (Indach-, Komplettdach- und ggf. auch Fassadenanlage) unter die Kosten einer Aufdachanlage zu bringen. Dies wird erreicht durch die günstige Herstellung der Profile (durch Extrusion), die geringe Anzahl von Komponenten, die geringen Konfektionsarbeiten, eine schnellere und einfachere Montage auf dem Dach bei hoher Montagetoleranz, eine von oben nach unten erfolgende Montage, eine werkzeuglose Montage der Module, einen einfachen Dachanschluss an First, Traufe und Ortgang, sowie eine einfache und flexible Auslegung der Anlage. Weiterhin ermöglicht die Erfindung einen hohen Freiheitsgrad hinsichtlich des Designs, z. B. durch eine farbliche Anpassung und eine Anpassung der Anlagengröße an die örtlichen Gegebenheiten. Weiterhin besteht die Möglichkeit, verschattete Flächen mit Dummys, z. B. einfachen Glasscheiben und Aluminium-Verbundplatten, zu belegen und somit den Ertrag und das Erscheinungsbild von Photovoltaik-Anlagen zu verbessern. Die mit dem Halteprofil montierten Module 3 sind in hohem Maße statisch belastbar, wobei Werte bis zu 5.400 N/m² erreichbar sind. Das Halteprofil 2 garantiert eine optimale Schindelung und Dichtheit.

## Patentansprüche

1. Mehrteiliger Rahmen für plattenförmige Module (3), vorzugsweise Dachmodule, umfassend zumindest ein Halteprofil (2) für plattenförmige Module (3), wobei das Halteprofil (2) aus Kunststoff oder Metall, vorzugsweise Aluminium, einen mehrteiligen Aufbau aus einer Halteleiste (10) und mit der Halteleiste (10) verbindbaren Haltehaken (11) besitzt, wobei durch die Verbindung von Halteleiste (10) und Haltehaken (11) ein Profilkörper (21, 22) gebildet wird, welcher derart ausgestaltet ist, dass zwei benachbarte Module (3) an einer Haltestruktur (7), vorzugsweise einer Dachunterkonstruktion, in einem Überlappungszustand gehalten werden, so dass sich der Profilkörper (21, 22) abschnittsweise zwischen den Modulen (3) erstreckt, und zumindest ein Dichtprofil (4, 9) für plattenförmige Module (3), wobei das zumindest eine Dichtprofil (4, 9) derart ausgebildet ist, dass zwei benachbarte Module (3) in einer Ebene liegend abdichtend gehalten werden, wobei das zumindest eine Dichtprofil (4,9) einen Profilkörper (41, 91) aus Metall, Kunststoff oder Kombinationen daraus aufweist, der sich abschnittsweise zwischen den Modulen (3) erstreckt, der Profilkörper (41, 91) im Wesentlichen H-förmig ausgebildet ist und zwei im Wesentlichen U-förmige Modulaufnahmen definiert, wobei die Modulaufnahmen einteilig ausgebildet sind,
wobei der Rahmen weiter ein Dichtlippenprofil (14) mit mindestens zwei Dichtlippen (15) umfasst, wobei das Dichtlippenprofil (14) mit der Halteleiste (10) verbunden, vorzugsweise verrastet ist und jeweils eine der Dichtlippen (15) im Überlappungsbereich zweier Module (3) an einem der überlappenden Module (3) anliegt.

2. Mehrteiliger Rahmen nach Anspruch 1, **dadurch gekennzeichnet, dass** die Verbindung zwischen Halteleiste (10) und Haltehaken (11) durch Verrastung gebildet ist.

3. Mehrteiliger Rahmen nach Anspruch 1 oder Anspruch 2, **dadurch gekennzeichnet, dass** der Profilkörper (21, 22) derart ausgebildet ist, dass er zumindest eines der benachbarten Module (3), vorzugsweise beide Module (3), im Überlappungszustand zumindest abschnittsweise randseitig umgreift.

4. Mehrteiliger Rahmen nach einem der vorangegangenen Ansprüche, **dadurch gekennzeichnet, dass** die Haltehaken (11) zumindest abschnittsweise mit einem Weichauflageüberzug (18) versehen ist.

5. Mehrteiliger Rahmen nach einem der vorangegangenen Ansprüche, **dadurch gekennzeichnet, dass** der Profilkörper (21, 22) einen im Wesentlichen S-förmigen Halteabschnitt (22) aufweist, der zwei im Wesentlichen U-förmige Modulaufnahmen definiert.

6. Mehrteiliger Rahmen nach einem der vorangegangenen Ansprüche, **dadurch gekennzeichnet, dass** die Halteleiste (10) Nuten (12) zur Aufnahme von Auflageprofilen (13) für die Module (3) umfasst.

7. Mehrteiliger Rahmen nach einem der vorangegangenen Ansprüche, **dadurch gekennzeichnet, dass** es sich bei dem Material des Profilkörpers (41, 91) des zumindest einen Dichtprofils (4, 9) um Aluminium, EPDM (Ethylen-Propylen-Dien-Monomer-Kautschuk) oder Kombinationen dieser Materialien handelt.

8. Mehrteiliger Rahmen nach einem der vorangegangenen Ansprüche, **dadurch gekennzeichnet, dass** in die Nuten (23) der Halteleiste (10) Auflageprofile (13) für die Module (3) eingezogen sind.

9. Mehrteiliger Rahmen nach einem der vorangegangenen Ansprüche, **dadurch gekennzeichnet, dass** der Rahmen in einem Kreuzungsbereich von dem zumindest einen Halteprofil (2) und dem zumindest einen Dichtprofil (4) ferner ein Kreuzstück (16) umfasst, das derart ausgebildet ist, dass es den Kreuzungsbereich abdichtet.

10. Mehrteiliger Rahmen nach Anspruch 9, **dadurch gekennzeichnet, dass** das Kreuzstück (16) eine Stützvorrichtung (17) umfasst, die einstückig an das Kreuzstück (16) angeformt ist und das zumindest eine Dichtprofil (4, 9) stirnseitig abstützt.

## Claims

1. A multi-part frame for plate-shaped modules (3), preferably roof modules, comprising:
at least one retaining profile (2) for plate-shaped modules (3), wherein the retaining profile (2) made of plastic or metal, preferably aluminium, has a multi-piece structure composed of a retaining strip (10) and the retaining strip (10) can be connected to retaining hooks (11), wherein, through the combination of retaining strip (10) and retaining hook (11) a profile body (21, 22) is formed, which is designed such that two neighbouring modules (3) on a support structure (7), preferably of a roof substructure, in an overlapping state are held so that the profile body (21, 22) in sections extends between the modules (3), and
at least one sealing profile (4, 9) for plate-shaped modules (3), wherein at least one sealing profile (4, 9) is designed such that two neighbouring modules (3) in a plane are held lying in a sealing manner, wherein at least one sealing profile (4,9) comprises a profile body (41, 91) made of metal, plastic or combinations thereof, from which extends partially between the modules (3), the profile body (41, 91) is formed essentially H-shaped and defines two essentially U-shaped module mounts, said module mounts are formed as one piece,
wherein the frame further comprises a sealing lip profile (14) with at least two sealing lips (15), wherein the sealing lip profile (14) is connected with the retaining strip (10), preferably latched, and one of the sealing lips (15) in the overlapping section of two modules (3) contacts one of the overlapping modules (3).

2. A multi-part frame according to claim 1 **characterised in that** the connection between the retaining strip (10) and retaining hooks (11) is formed by latching.

3. A multi-part frame according to claim 1 or claim 2, **characterised in that** the profile body (21, 22) is formed such that it surrounds at least one of neighbouring modules (3), preferably both modules (3) in the superimposed state, at least partially on the edge side.

4. A multi-part frame according to one of the preceding claims, **characterised in that** the retaining hook (11) is at least partially provided with a soft coating (18).

5. A multi-part frame according to one of the preceding claims **characterised in that** the profile body (21, 22) comprises an essentially S-shaped retaining section (22) that defines two essentially U-shaped module mounts.

6. A multi-part frame according to one of the preceding claims **characterised in that** the retaining strip (10) comprises grooves (12) for receiving support profiles (13) for the modules (3).

7. A multi-part frame according to one of the preceding claims **characterised in that** the material of the profile body (41, 91) of at least one sealing profile (4, 9) is aluminium, EPDM (ethylene-propylene-diene monomer rubber) or combinations of these materials.

8. A multi-part frame according to one of the preceding claims, **characterised in that** retracted into the grooves (23) of the retaining strip (10) are support profiles (13) for the modules (3).

9. A multi-part frame according to one of the preceding claims, **characterised in that** an intersection section of at least one retaining profile (2) and at least one sealing profile (4) further comprises a crosspiece (16) formed such that it seals the intersection section.

10. A multi-part frame according to claim 9, **characterised in that** the crosspiece (16) comprises a support device (17) formed as one piece on the crosspiece (16) and at least supports one sealing profile (4, 9) supporting on the end face.

## Revendications

1. Châssis-support en plusieurs parties pour modules en forme de plaque (3), de préférence des modules de toit, le châssis-support comprenant :
au moins un profilé de retenue (2) pour modules en forme de plaque (3), le profilé de retenue (2) en plastique ou métal, de préférence en aluminium, possèdant une structure en plusieurs parties composée d'une baguette de retenue (10) et de crochets de retenue (11) pouvant être reliés à la baguette de retenue (10), un corps de profilé (21, 22) étant formé par la liaison de la baguette de retenue (10) et des crochets de retenue (11), le corps de profilé étant conçu de telle sorte que deux modules voisins (3) soient maintenus sur une structure de retenue (7), de préférence une sous-construction de toit, dans un état de chevauchement, de telle sorte que le corps de profilé (21, 22) s'étende par portions entre les modules (3), et
au moins un profilé d'étanchéité (4, 9) pour modules en forme de plaque (3), dans lequel l'au moins un profilé d'étanchéité (4, 9) est conçu de telle sorte que deux modules voisins (3) soient maintenus en étant couchés avec étanchéité dans un plan, l'au moins un profilé d'étanchéité (4, 9) présentant un corps de profilé (41, 91) en métal, plastique ou une combinaison de ceux-ci, qui s'étend par portions entre les modules (3), le corps de profilé (41, 91) étant conçu essentiellement en forme de H et définissant deux réceptacles de modules essentiellement en forme de U, dans lequel les réceptacles de modules sont conçus en une seule partie,
le châssis-support comprenant en outre un profilé de lèvre d'étanchéité (14) avec au moins deux lèvres d'étanchéité (15), dans lequel le profilé de lèvres d'étanchéité (14) est relié à la baguette de retenue (10), de préférence est encliqueté et respectivement une des lèvres d'étanchéité (15) vient reposer dans la zone de chevauchement de deux modules (3) sur un des modules (3) en chevauchement.

2. Châssis-support en plusieurs parties selon la revendication 1, **caractérisé en ce que** la liaison entre la baguette de retenue (10) et le crochet de retenue (11) est formée par encliquetage.

3. Châssis en plusieurs parties selon les revendications 1 ou 2, **caractérisé en ce que** le corps de profilé (21, 22) est conçu de telle sorte qu'il vienne en prise du côté des bords au moins par portions avec au moins un des modules voisins (3), de préférence les deux modules (3), en l'état de superposition.

4. Châssis en plusieurs parties selon l'une quelconque des revendications précédentes, **caractérisé en ce que** les crochets de retenue (11) sont pourvus au moins sur des portions d'un revêtement souple (18).

5. Châssis en plusieurs parties selon l'une quelconque des revendications précédentes, **caractérisé en ce que** le corps de profilé (21, 22) présente une portion de retenue (22) essentiellement en forme de S, qui définit deux réceptacles de module essentiellement en forme de U.

6. Châssis-support en plusieurs parties selon l'une quelconque des revendications précédentes, **caractérisé en ce que** la baguette de retenue (10) comprend des rainures (12) pour recevoir des profilés de bord (13) pour le module (3).

7. Châssis-support en plusieurs parties selon l'une quelconque des revendications précédentes, **caractérisé en ce que** le matériau du corps de profilé (41,91) de l'au moins un profilé d'étanchéité (4,9) consiste en aluminium, EPDM (caoutchouc éthylène-propylène-diène-monomère) ou une combinaison de ces matériaux.

8. Châssis-support en plusieurs parties selon l'une quelconque des revendications précédentes, **caractérisé en ce que** des profils de bord (13) pour le module (3) sont rentrés dans les rainures (23) de la baguette de retenue (10).

9. Châssis-support en plusieurs parties selon l'une quelconque des revendications précédentes, **caractérisé en ce que** le châssis-support dans une zone de croisement de l'au moins un profilé de retenue (2) et de l'au moins un profilé d'étanchéité (4) comprend en outre une pièce en croix (16), qui est conçue de telle sorte qu'elle étanchéifie la zone de croisement.

10. Châssis-support en plusieurs parties selon la revendication 9, **caractérisé en ce que** la pièce en croix (16) comprend un dispositif de soutien (17), qui est façonné en un seul tenant sur la pièce en croix (16) et qui soutient du côté avant au moins un profilé d'étanchéité (4, 9).
